# EUROPEAN PATENT SPECIFICATION

(11) **EP 4 581 407 B1**
(45) Date of publication and mention of the grant of the patent: **18.11.2026**
(21) Application number: 23762507.4
(22) Date of filing: 30.08.2023
(51) Int. Cl.: G01V 5/00, G01T 1/167

(54) **RADIATION-BASED STANDALONE APPARATUS FOR WASTE CHARACTERISATION AND CORRESPONDING METHOD**
STRAHLUNGSBASIERTE EIGENSTÄNDIGE VORRICHTUNG ZUR ABFALLCHARAKTERISIERUNG UND ZUGEHÖRIGES VERFAHREN
APPAREIL AUTONOME BASÉ SUR LE RAYONNEMENT POUR CARACTÉRISATION DES DÉCHETS ET PROCÉDÉ CORRESPONDANT

(30) Priority: 30.08.2022 GB 202212563
(43) Date of publication of application: 09.07.2025
(73) Proprietor: Soletanche Freyssinet S.A.S., 92500 Rueil-Malmaison (FR)
(72) Inventor: CLARK, Robert, 92500 Rueil-Malmaison (FR); SMITH, Winston, 92500 Rueil-Malmaison (FR)
(74) Representative: Dehns
(86) International application number: PCT/EP2023/073838
(87) International publication number: WO 2024/047129

(56) References cited:
- CN-A- 112 558 135
- GB-A- 2 398 381
- JP-A- H07 209 493
- KR-A- 20180 050 016

## Description

This invention relates to a standalone apparatus for characterising objects, e.g. waste, for sorting, and associated systems and methods for using said apparatus.

Waste sorting and segregation during decommissioning of nuclear power plants is necessary for safely disposing of hazardous materials while allowing the industry to make the best use of its decommissioning waste streams.

Low-level waste emits radiation at levels which generally require minimal shielding during handling, transport and storage; whereas intermediate-level waste emits higher levels of radiation and requires additional shielding. High-level radioactive waste, on the other hand, is extremely hazardous and is kept for 10 or 20 years in spent fuel pools, before being stored in dry cask storage facilities.

Typically, waste sorting and segregation is performed by hand, by human workers, after making measurements of the radiation level of the waste. This often ends up being laborious and time consuming as well as being hazardous to the workers who must be physically present to handle the waste. The extra time necessitated by the lack of an automated measurement process and the presence of human workers mean that existing techniques for waste characterisation are typically expensive and vulnerable to human error.

Problems are encountered when measuring the radiation level of individual waste products, with current methods, as the waste is often in contact with other contaminated waste or contaminated surfaces. This can increase the risk of secondary contamination in the measurement location and gamma shine which can negatively affect the results of these measurements.

GB 2 398 381 A provides a method of correcting a detected emission level for attenuation in a body of material using a weight-based correction or a transmission-based correction. JP H07-209493 A provides a method for non-destructively analysing the components of a radioactive waste which reduces the number of processes and the radiation exposure of a worker. CN 112558135 A provides a detection system for the radioactive characteristics of nuclear facility waste packages.

The aim of the present invention is to provide an improved apparatus, system and method for characterising objects for sorting into categories.

From a first aspect, the invention provides a standalone apparatus for characterising potentially contaminated waste according to claim 1.

From a second aspect, the invention provides a system for characterising and categorising potentially contaminated waste according to claim 11.

From a third aspect, the invention provides a method of characterising and categorising potentially contaminated waste according to claim 13.

Thus it will be seen that, in accordance with the invention, waste objects can be characterised using a standalone apparatus, e.g. away from other waste items, to provide a 'profile' (or 'fingerprint') of captured data related to the object being surveyed. The object may be placed within the open volume between a first surface of the first module and the second module for the profile to be obtained. This profile can then be used to determine a category to which the object belongs. Once a category has been associated with the object, the object may be sorted into its category (e.g. the category may be either intermediate level waste or low level waste depending on the captured data representative the first and/or second property of the object).

Embodiments of the invention may thus facilitate the chemical, nuclear and/or physical characterisation of waste items, for example, using in-contact and non-contact, nondestructive methods. The provision of a standalone apparatus (which may be separate from other waste or from contaminated environments), may provide advantages over characterising objects in the typical way - e.g. measuring the objects in a contaminated environment (e.g. a container) with other waste items present.

As the apparatus for characterising potentially contaminated waste is a standalone (e.g. independent) apparatus, an object will typically be isolated and presented to the apparatus in order for the characterisation to be performed. This helps to reduce the presence of secondary contaminants, which is especially important while measurements are being taken. Such secondary contamination may have the potential to skew any results from the spectroscopic and/or radiation detectors. This may also reduce the risk of potential mis-consignment associated with difficult to measure radiation and contamination. The data captured at the standalone apparatus may be stored or transmitted for later use, e.g. for sorting and potentially for providing to a recipient facility as part of the waste consignment process.

As mentioned above, traditional techniques for waste sorting and segregation can be laborious, time consuming and expensive. Embodiments of the invention may be used to automate and speed up the process, thus helping to reduce the overall cost.

The invention may be used, for example, for applications in the fields of nuclear decommissioning, scientific research and healthcare, where it is important to quickly assess and identify the presence and severity of contamination before the disposal of waste can occur. Therefore, in a first set of embodiments, the apparatus is used for characterising potentially radioactive objects so that they can be categorised (e.g. based on their radioactivity level (e.g. concentration). The potentially radioactive objects may also be categorised based on other properties, such as their material composition.

In a set of embodiments, the apparatus is arranged to characterise radioactive waste. Therefore, the object may be suspected to comprise physical (e.g. radioactive) contaminants. In some embodiments, the waste comprises fission products (e.g. waste from a fission nuclear reactor) which can cause gamma shine. As embodiments of the present invention provide a standalone characterisation apparatus, using embodiments of the invention for characterising potentially radioactive waste can help with the reduction of gamma shine from contamination that may have occurred through contact with contaminated objects at a conveyor or waste container.

The standalone apparatus may be made from any suitable or desired materials. In a set of embodiments, the apparatus comprises one or more of: a carbon based composite material, a metal, a plastic and shielding material (e.g. lead).

The standalone apparatus may be sized and shaped to make it suitable for easy transportation - e.g. between sites. In a set of embodiments, therefore, the standalone apparatus is transportable. The standalone apparatus may have a dimension (e.g. height) of between 1m and 2m and at least one other dimension (e.g. width and/or depth) of between 0.3 m and 1m. For example, the standalone apparatus (and systems embodying the invention) may be sized and shaped to fit inside an ISO shipping container (e.g. for easy deployment to work sites).

The apparatus may comprise one or more supports for raising the first surface away from the floor (e.g. raising the first surface between 0.5m and 1m vertically from the floor).

In a set of embodiments, the second module is spaced above the first module. The second module may be supported by a support element connecting the first and second module.

The support element and the second module may together resemble a cantilever shape. The support element may extend between the first module and the second module. The support element may extend partially or entirely along an edge of each of the first module and the second module. The support element may be rigid. The support element may helpfully keep the first module and the second module separated, e.g. with a spacing of between 0.3m and 2m - e.g. between 0.4m and 1m - e.g. approximately 0.5m.

The distance between the first surface and the second module may be fixed or adjustable. In a set of embodiments, the distance between the first surface and the second module is fixed by the support element (i.e. it cannot be changed). The support element may be made of the same material as the supports that raise the first surface away from the floor.

The first surface may be facing upwards, e.g. away from the floor or toward the second module. Therefore, in a set of embodiments, a detection surface of the at least one radiation detector (and other detectors) may be facing upwards, away from the floor. The first surface may be arranged between the at least one radiation detector and the open volume. The first surface may comprise a material that is transparent to gamma radiation - e.g. a carbon composite material.

The first module comprises a mass balance. The first surface is supported by the mass balance, which allows the apparatus to measure the mass of the object (e.g. while simultaneously capturing data representative of the radiation emitted by the object using the radiation detector). This allows the radioactivity of an object per given mass (e.g. Becquerels per gram (or equivalent)) to be determined.

In a set of embodiments, the first surface is a platform surface, e.g. suitable for resting objects upon. The first surface may comprise a (relatively) flat portion, which may allow objects to be stably rested on top of the first surface. The first surface may comprise any suitable shape, e.g. an approximately rectangular or approximately circular shape.

The radiation detector of the first module may capture data representative of a first property of the object, when the object is inserted within the open volume between the first surface and the second module, e.g. proximal to the first module, e.g. placed upon the first (platform) surface.

The spectroscopic detector (and/or other detectors) of the second module may capture data representative of a second property of the object, when the object is inserted within the open volume between the first surface and the second module, e.g. proximal to the second module, e.g. held just below the second module.

In a set of embodiments, the first property is related to a radioactivity level (e.g. concentration) of the object and the second property is related to a material composition of the object.

As will be appreciated by the skilled person, the spectroscopic detector and radiation detector are different types of detectors. For instance, the skilled person will appreciate that spectroscopic detectors measure how electromagnetic radiation interacts with matter and radiation detectors measure the electromagnetic radiation itself.

In some embodiments, the spectroscopic detector (and other detectors, e.g. an alpha-beta contamination monitor, in the second module) faces towards the first surface, e.g. down toward a floor (e.g. if the first surface faces away from the floor). For example, where the spectroscopic detector is an active spectroscopic detector the radiation may be emitted in the direction of the first surface. This arrangement allows the object to be well placed for measurements to be taken by the first module and the second module so that only some vertical movement of the object within the apparatus may be necessary to fully characterise the object.

This orientation of the spectroscopic detector (and other detectors) may also help to reduce the risk of such detector(s) becoming contaminated, taking advantage of the measurement surface of the spectroscopic detector facing the floor and gravity preventing the accumulation of particulates.

In a set of embodiments, the first module comprises shielding. The shielding may comprise lead, e.g. having a thickness between 1 cm and 10 cm. The shielding may comprise an open top shielded container to shield (the radiation detectors) from the sides and below. For example, one or more (e.g. all) of the radiation (e.g. gamma) detector(s) may be shielded from the sides and below by, giving an 'upwards' field of view. This means that gamma rays potentially being emitted by neighbouring boxes or drums containing waste may be absorbed by the shielding.

More close range radiation detectors (e.g. alpha-beta detectors) may be relatively insensitive to gamma 'shine' and so may not require shielding.

The first module may comprise shielding for its at least one radiation detector(s). Therefore, the first module may take up more space than the second module. In a set of embodiments, the second module is more compact (e.g. smaller) than the first module. The first module may comprise detectors which require shielding (e.g. against gamma radiation) whereas the second module may comprise detectors which do not require shielding. This allows the second module to be more compact and to weigh less. This makes the second (e.g. more light weight) module more suitable for being supported above the first module (e.g. by a support element).

The at least one radiation detector of the first module may comprise a gamma detector. For example, the first module may comprise a high dose gamma detector and a low energy gamma detector.

In a set of embodiments, one or more of the (at least one) radiation detectors is a Cadmium Zinc Telluride (CZT) detector. Using CZT detectors, in particular, helps to maximise the spectral resolution of the measurements whilst not over complicating the system with the requirement of a cooling system, which would be required if using a higher resolution Germanium detector. CZT detectors may also have the additional advantage of being more compact, due to the absence of a bulky cooling system, and lower cost than Germanium systems.

In a set of embodiments, at least one radiation detector of the first module comprises a plurality (e.g. array) of gamma detector elements. In a set of embodiments, the gamma detector array comprises a plurality of Cadmium Zinc Telluride (CZT) detector elements. In a set of embodiments each of the plurality of gamma detector elements comprises a connection to a respective multi-channel analyser (MCA).

Whilst shielding and collimation of the detector may be viable options for making the detector more resilient to high dose rates, collimation can result in measurements becoming less representative, due to a loss of 'field of view', and shielding the detector may disproportionally reduce its sensitivity to low energy gamma radiation (e.g. Am-241) compared to higher energy gamma radiation (e.g. Cs-137 and Co-60). Therefore, small CZT detectors (e.g. 0.5 cm³) may be used. One 'trade-off' for selecting a smaller detector is to increase the systems attainable limits of detection and potentially increase the required count time to accurately characterise lower activity waste items; thereby potentially making the system less transferable. To counter this effect and increase the activity range of the system, a plurality of (CZT) detectors (arranged in an array) can advantageously be utilised. The use the plurality of (CZT) detectors means that whilst individually the detectors may be small, and are resistant to high dose rate items, the individual spectra can be summed to improve the attainable limits of detection and reduce required count times.

In a set of embodiments, the first module comprises a collimating shutter arranged to cover the field of view of the radiation detector when in a closed configuration and to uncover the field of view of the radiation detector when in an open configuration. This may be useful for when the radiation detectors reach an upper limit, i.e. which the detectors become 'saturated'. The collimating shutter can be moved into place above the radiation detector (e.g. the CZT detector array) should the radiation detector become 'saturated' - i.e. should it reach a saturation point. This can increase the measurable range of the spectrometry system. The saturation point may be determined using a measured 'dead time' of the radiation detector. The radiation detector may be positioned in an 'upward facing' orientation underneath an upward facing surface of the standalone apparatus.

In a set of embodiments, the first module also comprises a Pu/Am radiation detector for capturing data representative of a Plutonium and Americium ratio. Such a Pu/Am radiation detector may be shielded from the sides and below. Providing a Pu/Am radiation detector helps to mitigate uncertainty in Plutonium/Americium ratios. Usually Americium occurs at a fairly constant ratio to Plutonium and so typically the Americium gamma is measured and the amount of Plutonium is inferred. However, if isotopic separation has occurred or the plutonium is relatively young, then the ratio may be quite different. Use of a Pu/Am radiation detector allows the standalone apparatus to capture data representative of this ratio. An operator can then be alerted if the ratio of Plutonium and Americium is not in line with an expected ratio.

In a set of embodiments, the second module comprises an alpha-beta radiation detector (e.g. a scintillation detector). One example of a commercial off-the-shelf alpha-beta radiation detector that may be used as the alpha-beta radiation detector is the CoMo 170 scintillation detector by Nuvia (RTM). The addition of an alpha-beta radiation detector helps increase the types of radiation that can be detected using the standalone apparatus. Preferably, the alpha-beta detector is arranged in a separate module (i.e. the second module) to any gamma detectors.

The spectroscopic detector of the second module may collect a spectrum for use in determining the chemical composition of the object. In a set of embodiments, the spectroscopic detector uses atomic emission spectroscopy to capture a spectrum for use in identifying one or more chemical elements that make up the object.

The spectroscopic detector may comprise an active spectroscopic detector (e.g. arranged to actively transmit a beam of radiation). In a set of embodiments, the active spectroscopic detector comprises a radiation source arranged to generate and emit radiation having a wavelength in the range of 0.005 nm - 1 mm. In a set of embodiments, the radiation source comprises a laser source arranged to generate and emit a laser beam. For example, the laser source may be arranged to generate and emit radiation having a wavelength in the range of 100 nm - 1 mm. One example of such a detector is a laser induced breakdown spectroscopy (LIBS) detector. In a set of embodiments, therefore, the spectroscopic detector comprises a LIBS detector.

As will be appreciated by the skilled person, a LIBS detector typically uses a laser to ablate a small area of an object, temporarily forming plasma. When the laser pulse stops, the plasma cools and electrons of the excited atoms and ions fall into lower energy states. This causes the plasma to emit light with discrete spectral peaks.

Each element in the periodic table is associated with unique LIBS spectral peaks which allows the chemical composition of the object to be determined from the resulting spectra. As the spectroscopic detector may require active transmission of a laser beam, in a set of embodiments, the second module comprises an aperture or opening through which a laser beam can be transmitted.

In another set of embodiments, the active spectroscopic detector comprises a radiation source arranged to generate and emit radiation having a wavelength in the range of 0.005 nm -10 nm (e.g. having a wavelength in the X-ray range of radiation). An example of such an active spectroscopic detector is an XRF (X-ray fluorescence) detector.

In a set of embodiments, the spectroscopic detector comprises an XRF (X-ray fluorescence) detector. Those skilled in the art will appreciate that XRF can determine the elemental composition of materials by using an X-ray beam to excite fluorescent radiation from an object.

The second module may comprise a metal detector (e.g. a magnetometer). The applicant has found that the combination of a spectroscopic detector (e.g. LIBS or XRF) and a metal detector may provide the necessary coverage to facilitate material composition characterisation. This combination may facilitate both surface level characterisation and in-depth characterisation. A spectroscopic detector (e.g. LIBS and/or XRF) may only be able to detect the composition of the surface material of the object, a metal detector (e.g. a pulse induction magnetometer) would be able to detect deeper into the object. For example, a steel bar with a plastic, powder coating would be characterised as a plastic item using the spectroscopic detector, whereas a metal detector would provide a characterisation representative of the interior and exterior parts of the object (e.g. it would sense the metal interior). The spectroscopic detector and metal detector together could characterise the item as a steel bar with a plastic coating.

Commercial off the shelf detectors may thus be integrated into the apparatus, providing the necessary data outputs to the control system and Intelligence Maintenance System (IMS). This may facilitate of ease of repair and maintenance.

In a set of embodiments, prior to presenting an object to the standalone apparatus, the at least one radiation detector of the standalone apparatus performs a background count to allow for background subtraction. If radioactive waste accumulates in drums and boxes near to the standalone apparatus, then the background count rates on the detectors may increase, adding to the measured count rates and increasing the required counting time for the radiological measurements. To counteract this increase in count rate, all measurements may be background subtracted using a fresh background taken before each measurement.

Prior to presenting an object to the standalone apparatus, the (first surface of the) standalone apparatus may be cleaned, for example, by a vacuum system - e.g. a vacuum attachment on the robotic arm or an inbuilt vacuum system on the apparatus. This may help to prevent (particulate) contaminant build up on the first surface of the standalone apparatus.

There may be a mechanism (e.g. a robot, e.g. a floor mounted robot(ic arm)) for presenting the object to the apparatus. In a set of embodiments, a mechanism arranged to: obtain the object from a source location, separate to and spaced from the standalone apparatus; move the object and insert the object into the open volume between the first surface and the second module of the standalone apparatus. This may prevent a need for human workers to be present to take the object to be analysed to the standalone apparatus.

The mechanism may be arranged to hold the object proximal to the first module, e.g. placed upon the first surface. The mechanism may be arranged to hold the object proximal to the second module, e.g. held just below the second module.

In a set of embodiments, when the object is inserted into the open volume between the first surface and the second module, the mechanism first holds or places the object proximal to the one of the first module and the second module (to capture data from the corresponding detector(s)) and then holds or places the object proximal to the other one of the first module and the second module (to capture data from the corresponding detector(s). Presenting the object proximal to the first module may comprise placing the object on the first surface of the first module.

Having a mechanism which is able to move the object may provide facilitation of direct alpha-beta contamination measurements, by controlling the mechanism to present the object to an alpha-beta contamination monitoring device in the second module, and/or facilitation of a direct LIBS and magnetometer measurement to identify material types by having the mechanism present the object to these devices in the second module. Presenting the object proximal to the second module may comprise holding the object in the open volume a small distance away from the second module.

As described above, the data captured at the standalone apparatus may be transmitted or stored by the apparatus. The standalone apparatus may comprise processing circuitry and the categorisation of the object may be automatically performed by said processing circuitry. Alternatively, the categorisation of the object may be automatically performed by a processing circuitry which is remote from the apparatus.

Once a category has been associated with the object, corresponding instructions may be sent to control logic of the (e.g. robot) mechanism which may be configured to control an actuating means of the mechanism to sort the object into a destination location (e.g. a waste drum or box) associated with the category.

Information related to the provenance of an object (i.e. its source or origin) may help to characterise the object for sorting. Generally, where waste has little or poor provenance, there is a higher risk of mis-consignment. Testing gamma emitters and screening for unexpected alpha and beta emissions and Plutonium/Americium ratios may help to determine the provenance of the object. Additionally, where provenance information is available, this may be used by the system and checked, which may provide greater assurance to end users and avoid costly potential rectification of waste mis-consignment.

Features of any aspect or embodiment described herein may, wherever appropriate, be applied to any other aspect or embodiment described herein. Where reference is made to different embodiments or sets of embodiments, it should be understood that these are not necessarily distinct but may overlap.

Certain preferred embodiments of the invention will now be described, by way of example only, with reference to the accompanying drawings, in which:
FIG. 1 is a schematic drawing of a standalone apparatus embodying the invention;
FIG. 2 is a schematic drawing of a waste characterisation and categorisation system embodying the invention;
FIG. 3 is a computer aided design (CAD) illustration of a waste characterisation and categorisation system similar to the system shown in FIG. 2; and
FIG. 4 is a CAD illustration of the system of FIG. 3 in a freight container.

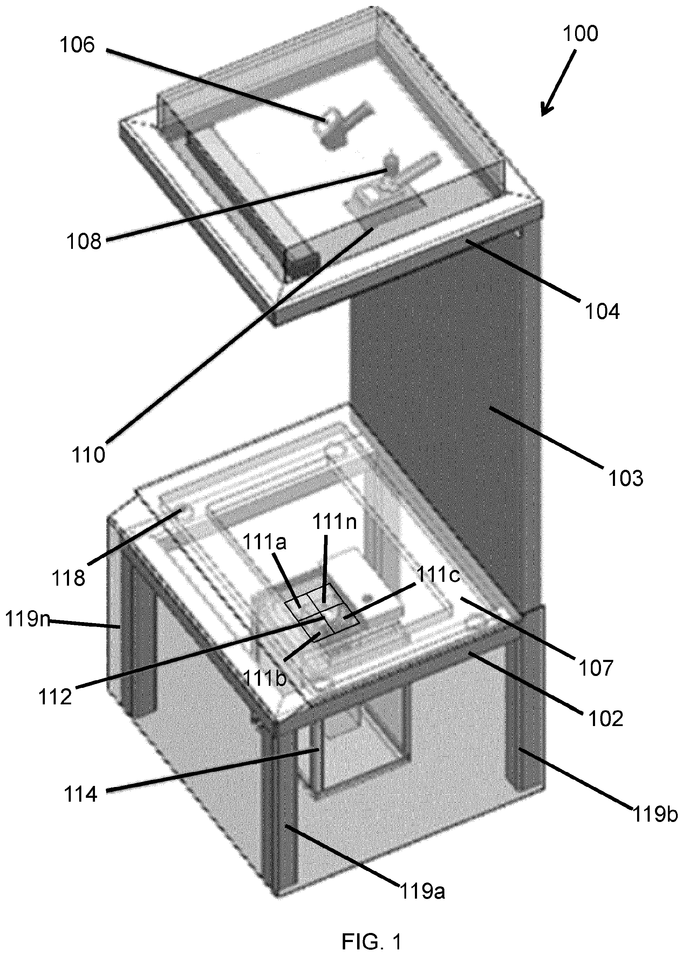

FIG. 1 shows a schematic drawing of a standalone apparatus 100 embodying the invention, which can be used for characterising potentially contaminated waste before segregating the waste, e.g. into different levels of radioactivity.

The apparatus is largely made of carbon based composite material, metal or plastic and some shielding material. The apparatus 100 is raised off the floor by four supports at each corner of the apparatus 100.

The apparatus comprises two sections: a first module 102 and a second module 104. The first module 102 comprises a platform surface 107 suitable for resting an object on top of. The platform surface 107 is constructed from a carbon composite panel.

The second module 104 is raised above the first module 102 and is supported by a support element 103. The support element 103 and the second module 104 together resemble a cantilever shape. The support element 103 extends between the first module 102 and the second module 104 and along an entire edge of each of the first module 102 and the second module 104. The support element 103 keeps the first module 102 and the second module 104 separated with a spacing therebetween of approximately 0.5m. The support element 103 may be made of the same material as the supports 119a-119n that keep the platform surface 107 elevated from the floor.

The apparatus 100 may comprise any suitable or desired combination of detectors. In the embodiment shown in FIG. 1, the first module 102 comprises: a mass balance 118, and a Cadmium Zinc Telluride (CZT) gamma detector array 112. The gamma detector array 112 comprises an array of four CZT gamma detector elements 111a-n.

Each CZT detector element 111a-n of the gamma detector array 112 has its own integrated multi-channel analyser (MCA) tightly packaged in a shielded well 114 to protect from gamma shine, with a retractable collimator (not shown) to help the detector 112 cope with higher dose rates. This approach allows the gamma detector 112 to have a significantly higher dynamic range than a single detector of the same overall size. The CZT detector elements 111a-n are off the shelf items and their integrated build reduces installation and packaging complexity. The first module 102 also comprises a shielding 114 material for shielding the gamma detectors from the sides and below. The shielding 114 comprises lead having a thickness of approximately 100 mm.

In this embodiment, the second module 104 comprises a laser induced breakdown spectroscopic detector (LIBS) 106, an alpha and beta radiation sensor 110, and a magnetometer or a metal detector 108. The combination of LIBS 106 and a metal detector 108 are found to provide the necessary coverage to facilitate material composition characterisation.

The second module 104 comprises a close range radiation detector in the form of an alpha-beta detector 110 (i.e. the CoMo 170 scintillation detector by Nuvia (RTM)). This type of detector 110 does not require shielding as it is relatively insensitive to gamma 'shine'. Therefore, the alpha-beta detector 110 is more suitable for use in the second module 104 which is more compact and which does not comprise shielding.

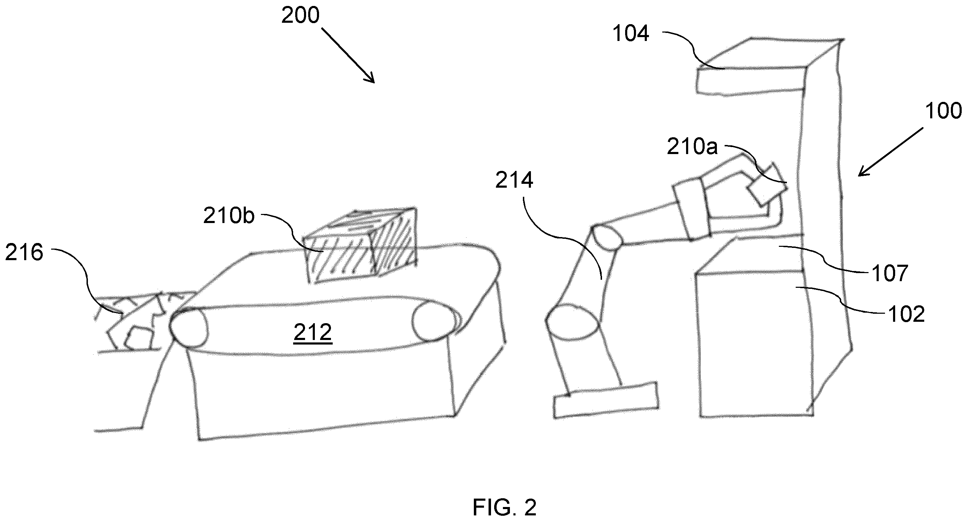

FIG. 2 shows a schematic drawing of a waste characterisation and categorisation system embodying the invention. A standalone apparatus 100, having the same features as the apparatus of FIG. 1, is positioned next to a robotic arm 214 which is mounted to the floor and holding an object 210a being characterised. Next to the robotic arm is a box or drum of potentially contaminated waste items 216 and a conveyer 212. An object 210b, ready to be characterised, sits on top of the conveyer 212. The robotic arm 214 is large enough and has enough degrees of freedom (e.g. 6 DOF) to reach and grab objects 210a, 210b from the conveyer 212 and to reach over to the standalone apparatus 100 where the objects 210a, 210b can be presented and characterised using the detectors in the first and second modules 102, 104.

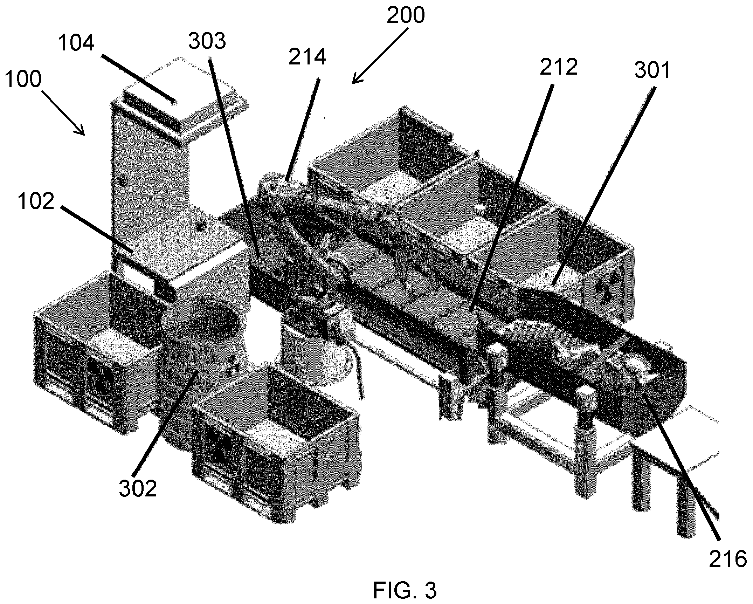

FIG. 3 is a computer aided design (CAD) illustration of a waste characterisation and categorisation system similar to the system shown in FIG. 2.

In FIG. 3, the same system shown in FIG. 2 can be seen with the addition of different containers for different levels of waste. Rectangular green boxes (e.g. 301) are provided for low level waste (LLW) whereas yellow circular drums (e.g. 302) are provided for intermediate level waste (ILW). It can be seen that there five LLW boxes and only one ILW drum - which is proportional to the expected amounts of ILW and LLW. The boxes and drums may be made very visually distinguishable (i.e. having different shapes and colours) to help any cameras (not shown) associated with the robotic arm 214 to determine which is which. Furthermore, the system of FIG. 3 shows an exceptional item bin 303 which is for collecting items identified as exceptions, e.g. fluid containers, which are left on the conveyer 212 and are collected at the end.

Operation of the apparatus and system embodying the invention will now be described with reference to FIGS. 1-3.

Waste items 210b are fed onto the conveyor 212. The speed of the conveyor 212 is controlled to help separate out individual items. The robotic arm 214 picks an object 210a and moves it to the standalone apparatus 100 for characterisation.

The standalone apparatus 100 can characterise the mass, material, and radioactivity of an object 210a, using the balance 118, spectroscopic detector 106, metal detector 108 and radiation detectors 112,110 - to build a profile of the object 210a. The robotic arm 214 first places an item on the platform surface 107 of the first module 102. This platform 107 is largely transparent to gamma radiation, allowing for an array of gamma detectors to be arranged below the platform surface 107.

Thus, objects placed on the platform 107 are simultaneously weighed and assessed for gamma radiation by the CZT array 112. Following measurements on the table, the object 210a is again picked up by the robotic arm 214, then presented to the detectors in the second module 104 for alpha and beta radiation measurements (using the alpha-beta detector 110), induced magnetic field and LIBS (laser induced breakdown spectroscopy) 106 measurements. These sensors 110, 106 require close proximity to the item to be measured. If required, the object 210a may be repositioned to allow for measurement from multiple angles and locations through movement of the robotic arm 214.

Information from the apparatus 100 will be processed either at the apparatus 100 or remote from the apparatus 100 to provide a classification (e.g. a category) so that it can be sent to the appropriate waste stream. For example, this may be to determine segregation between intermediate level waste (ILW) (e.g. to be placed in drum 302) and low level waste (LLW) (e.g. to be placed in box 301). The LIBS sensor 106 may allow accurate differentiation between visually similar materials. The metal detector 108 and mass balance 118 measurements, can provide additional checks.

Once the object 210a has been classified, it can be packed into the appropriate waste container (e.g. 301, 302 or 303), enabling maximisation of recycling of the waste. The robotic arm 214 is able to reach into containers to place items.

Waste at the activity of interest is likely to be associated high dose rates which can result in detector systems becoming 'saturated'. This can render spectral analysis problematic and increases required count times. This problem is generally tackled by reducing the sensitivity of the detector (i.e. through use of a less sensitive detector medium or a smaller detector size) or by reducing the count-rate observed by the detector through collimation (i.e. reducing the detectors field of view), shielding (i.e. placing an attenuating material between the detector and the source term), or increasing the distance between the detector and the source term.

However, each of these solutions has a 'trade-off'. For example, decreasing the size of the detector will reduce the count rate observed allowing for the measurement of higher activity waste. However, the trade-off is that limits of detection will be higher, resulting in some radionuclides not being detected; potentially limiting the system to the assessment of higher level waste only.

In the embodiments described herein CZT detector elements 111a-n are used as the gamma detector 112. This choice of detector helps to maximise the spectral resolution whilst not over complicating the system with the requirement of a cooling system, which would be required if using a higher resolution Germanium detector. CZT detectors have the additional advantage of being more compact, due to the absence of a bulky cooling system, and cheaper than Germanium systems.

For the system embodying the invention, it is desirable for it to be a compact system which can be easily transported and assembled. Therefore, the detector assembly is required to be in an intimate geometry with the waste being assayed (i.e. < 50 cm detector distance). For the activity range of interest, this may require the gamma detector 112 to be either shielded/collimated or small with electronics capable of processing high count rates.

Whilst shielding and collimation of the detector are viable options for making the detector more resilient to high dose rates, collimation can result in measurements becoming less representative, due to a loss of 'field of view', and shielding the detector disproportionally reduces its sensitivity to low energy gamma radiation (e.g. Am-241) compared to higher energy gamma radiation (e.g. Cs-137 and Co-60). Therefore, the preference for the embodiment system is to utilise a small CZT detector (e.g. 0.5 cm³).

However, the 'trade-off' of selecting a smaller detector is to increase the systems attainable limits of detection and potentially increasing the required count time to accurately characterise lower activity waste items; thereby making the system less transferable. To counter this effect, thereby increasing the activity range of the system, an array of CZT detectors 111a-n is utilised. The use of an array 112 means that whilst individually the detectors are small, and are resistant to high dose rate items, the individual spectra can be summed to improve the attainable limits of detection and reduce required count times.

However, the system will still have an upper limit at which the detectors will become 'saturated'. To increase the measurable range of the spectrometry system still further, the system is fitted with a collimating shutter which can be moved into place above the CZT detector array 112 should the detector 112 become 'saturated'; this point can be determined using the detector measured 'dead time'. The CZT array 112 is positioned 'upward facing' underneath the composite top of the sensor array table. Objects 210a, 210b can be moved onto the platform surface 107 and placed over the detector assembly 112 by the robotic arm 214. The system 200 analyses the spectra to produce peak areas.

As waste accumulates in the drums and boxes, during characterisation and sorting, the background count rates on the detectors 112, 106, 110 increases, adding to the measured count rates and increasing the required counting time for the radiological measurements. To counteract this increase in count rate, all measurements may be background subtracted using a fresh background taken before each measurement.

The gamma detectors 112 are shielded from the sides and below by up to 100 mm of lead, giving an 'upwards' field of view. The alpha-beta detector 110 is relatively insensitive to gamma 'shine' and so may not require any shielding at all. This makes it more suitable for the more compact second module 104 which is suspended above the first module 102.

As discussed above, the system may advantageously be modular, compact and transportable. Advantageously, the standalone apparatus 100 embodying the invention is sized and shaped to fit inside an ISO shipping container.

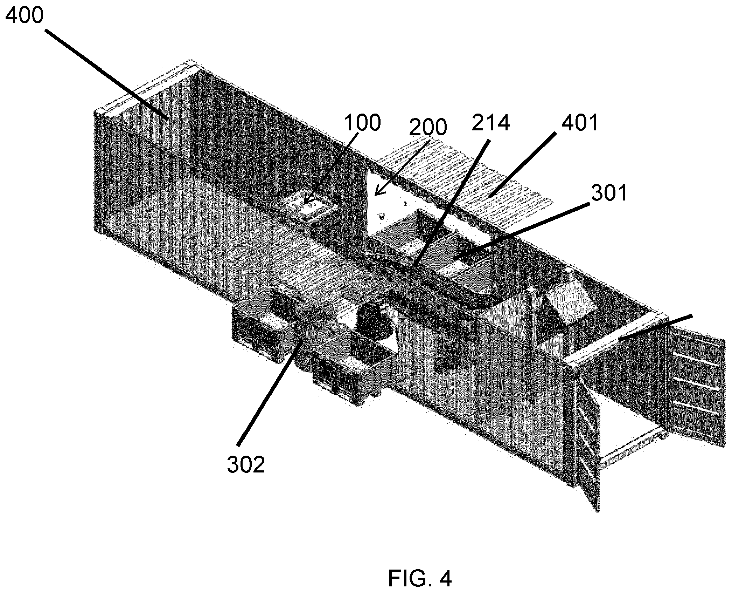

FIG. 4 is a CAD illustration of the system of FIG. 3 in a shipping container. The system 200 has the same features as the system shown in FIG. 3 with the addition of the shipping container 400 housing the standalone apparatus 100 and the robotic arm 214.

The overall dimensions of the system 200 can be chosen to allow the system 200 to fit into the high-cube ISO shipping container 400 for easy deployment. Waste drums 302 and boxes 301 are external to the shipping container 400. However, to shield radiation emitted by the waste or to prevent the escape of contaminated particulates, a protective containment tent or modular containment structure can be erected to enclose sides of the shipping container 400.

It will be appreciated by those skilled in the art that the invention has been illustrated by describing one or more specific embodiments thereof, but is not limited to these embodiments; many variations and modifications are possible, within the scope of the accompanying claims.

## Claims

1. A standalone apparatus (100) for characterising potentially contaminated waste, comprising:
a first module (102) comprising a first surface (107) and at least one radiation detector (112) arranged to capture data representative of a first property of an object (210a);
wherein the first module (102) comprises a mass balance (118) and the first surface (107) is supported by said mass balance (118);
a second module (104) comprising at least one spectroscopic detector (106) arranged to capture data representative of a second property of the object (210a);
an open volume between the first surface (107) and the second module (104) for receiving the object (210a), wherein the first surface (107) is arranged between the at least one radiation detector (112) and the open volume; and
a memory and/or transmitter arranged to store and/or transmit the captured data representative of the first and/or second property of the object (210a);
wherein the stored or transmitted data representative of the first and/or second property of the object (210a) is used to determine the radioactivity of the object (210a) per given mass for categorising the object (210a).

2. The apparatus (100) as claimed in claim 1, wherein the first property is related to a radioactivity level of the object (210a) and the second property is related to a material composition of the object (210a).

3. The apparatus (100) as claimed in claim 1 or 2, wherein the second module (104) is spaced above the first module (102), optionally wherein the first surface (107) is arranged to face upwards.

4. The apparatus (100) as claimed in claim 1, 2 or 3, wherein the second module (104) is supported by a support element (103) extending between the first module (102) and the second module (104), optionally wherein the support element (103) extends partially or entirely along an edge of each of the first module (102) and the second module (104), optionally wherein a distance between the first surface (107) and the second module (104) is fixed by the support element (103), optionally wherein the first module (102) and the second module (104) are separated with a spacing of between 0.3m and 2m.

5. The apparatus (100) as claimed in any one of the preceding claims, wherein the at least one radiation detector (112) of the first module (102) is arranged to capture data representative of a first property of the object (210a), when the object (210a) is inserted within the open volume between the first surface (107) and the second module (104), proximal to the first module (102) and/or wherein the at least one spectroscopic detector (106) of the second module (104) is arranged to capture data representative of a second property of the object (210a), when the object (210a) is inserted within the open volume between the first surface (107) and the second module (104), proximal to the second module (104).

6. The apparatus (100) as claimed in any one of the preceding claims, wherein the first module (102) comprises an open top shielded container to shield the at least one radiation detector (112) from its sides and below and/or a collimating shutter arranged to cover the field of view of the at least one radiation detector (112) when in a closed configuration and to uncover the field of view of the at least one radiation detector (112) when in an open configuration.

7. The apparatus (100) as claimed in any one of the preceding claims, wherein the second module (104) is more compact than the first module (102) and/or the second module (104) comprises an aperture or opening through which a radiation beam can be transmitted and/or the second module (104) comprises a metal detector (108).

8. The apparatus (100) as claimed in any one of the preceding claims, wherein the at least one radiation detector (112) of the first module (102) may comprises a plurality of gamma detector elements (111a-n) arranged in an array, optionally wherein each gamma detector element (111a-n) comprises a Cadmium Zinc Telluride (CZT) detector and/or comprises a connection to a respective multi-channel analyser (MCA).

9. The apparatus (100) as claimed in any one of the preceding claims, wherein the first module (102) comprises a Pu/Am radiation detector for capturing data representative of a Plutonium and Americium ratio and/or the second module (104) comprises an alpha-beta radiation detector (110).

10. The apparatus (100) as claimed in any one of the preceding claims, wherein the spectroscopic detector (106) uses atomic emission spectroscopy to capture a spectrum for use in identifying one or more chemical elements that make up the object (210a) and/or wherein the spectroscopic detector (106) comprises an active spectroscopic detector, e.g. a laser induced breakdown spectroscopy (LIBS) detector or an X-ray Fluorescence (XRF) detector.

11. A system (200) for characterising and categorising potentially contaminated waste, comprising:
a standalone apparatus (100) for characterising potentially contaminated waste according to claim 1; and
a sorting module arranged to sort the object (210a) into said category.

12. The system of claim 11, comprising a mechanism (214) arranged to: obtain the object (210a) from a source location (212), the source location (212) being separate to and spaced from the standalone apparatus (100); move the object (210a) and insert the object (210a) into the open volume between the first surface (107) and the second module (104) of the standalone apparatus (100).

13. A method of characterising and categorising potentially contaminated waste, comprising:
presenting an object (210a) to a standalone apparatus (100), for characterising potentially contaminated waste, the standalone apparatus (100) comprising a first module (102) and a second module (104), wherein the first module (102) comprises a mass balance (118) and a first surface (107) supported by said mass balance (118);
positioning the object (210a) within an open volume between the first surface (107) of the first module (102) and the second module (104);
capturing data representative of a first property of the object (210a) using at least one radiation detector (112), wherein the first module (102) comprises the at least one radiation detector (112), wherein the first surface (107) is arranged between the at least one radiation detector (112) and the open volume;
capturing data representative of a second property of the object (210a) using a spectroscopic detector (106), wherein the second module (104) comprises the spectroscopic detector (106);
storing and/or transmitting the captured data representative of the first and/or second property of the object (210a);
determining the radioactivity of the object (210a) per given mass based on the captured data representative of the first and/or the second property;
associating the object (210a) with a category based on the radioactivity of the object (210a) per given mass; and
sorting the object (210a) into said category.

14. The method as claimed in claim 13, comprising, prior to presenting the object (210a) to the standalone apparatus (100), performing a background count using the at least one radiation detector (112) for background subtraction and/or cleaning the first surface (107) using a vacuum system and/or presenting an object (210a) to a standalone apparatus (100) comprises holding or placing the object (210a) proximal to the one of the first module (102) and the second module (104) and subsequently holding or placing the object (210a) proximal to the other one of the first module (102) and the second module (104).

15. The method as claimed in claim 13 or 14, wherein the method comprises, once a category has been associated with the object (210a), sending corresponding instructions to control logic of a mechanism (214) for presenting an object (210a) to a standalone apparatus (100), and controlling an actuating means of the mechanism (214) to sort the object (210a) into a destination location associated with the category.

## Patentansprüche

1. Eigenständige Einrichtung (100) zum Charakterisieren von potenziell kontaminierten Abfällen, umfassend:
ein erstes Modul (102), das eine erste Fläche (107) und mindestens einen Strahlungsdetektor (112) umfasst, der dazu angeordnet ist, Daten zu erfassen, die eine erste Eigenschaft eines Objekts (210a) darstellen;
wobei das erste Modul (102) eine Massenwaage (118) umfasst und die erste Fläche (107) durch die Massenwaage (118) gestützt wird;
ein zweites Modul (104), das mindestens einen spektroskopischen Detektor (106) umfasst, der dazu angeordnet ist, Daten zu erfassen, die eine zweite Eigenschaft des Objekts (210a) darstellen;
einen offenen Raum zwischen der ersten Fläche (107) und dem zweiten Modul (104) zum Aufnehmen des Objekts (210a), wobei die erste Fläche (107) zwischen dem mindestens einen Strahlungsdetektor (112) und dem offenen Raum angeordnet ist; und
einen Speicher und/oder einen Übertrager, der dazu angeordnet ist, die erfassten Daten, die die erste und/oder zweite Eigenschaft des Objekts (210a) darstellen, zu speichern und/oder zu übertragen;
wobei die gespeicherten oder übertragenen Daten, die die erste und/oder zweite Eigenschaft des Objekts (210a) darstellen, dazu verwendet werden, die Radioaktivität des Objekts (210a) pro gegebener Masse zum Kategorisieren des Objekts (210a) zu bestimmen.

2. Einrichtung (100) nach Anspruch 1, wobei sich die erste Eigenschaft auf das Radioaktivitätsniveau des Objekts (210a) bezieht und sich die zweite Eigenschaft auf eine Materialzusammensetzung des Objekts (210a) bezieht.

3. Einrichtung (100) nach Anspruch 1 oder 2, wobei das zweite Modul (104) oberhalb des ersten Moduls (102) beabstandet ist, wobei optional die erste Fläche (107) dazu angeordnet ist, nach oben gewandt zu sein.

4. Einrichtung (100) nach Anspruch 1, 2 oder 3, wobei das zweite Modul (104) durch ein Stützelement (103) gestützt wird, das sich zwischen dem ersten Modul (102) und dem zweiten Modul (104) erstreckt, wobei optional sich das Stützelement (103) teilweise oder vollständig entlang einer Kante sowohl des ersten Moduls (102) als auch des zweiten Moduls (104) erstreckt, wobei optional ein Abstand zwischen der ersten Fläche (107) und dem zweiten Modul (104) durch das Stützelement (103) festgelegt ist, wobei optional das erste Modul (102) und das zweite Modul (104) mit einer Beabstandung von zwischen 0,3 m und 2 m getrennt sind.

5. Einrichtung (100) nach einem der vorstehenden Ansprüche, wobei der mindestens eine Strahlungsdetektor (112) des ersten Moduls (102) dazu angeordnet ist, Daten zu erfassen, die eine erste Eigenschaft des Objekts (210a) darstellen, wenn das Objekt (210a) in den offenen Raum zwischen der ersten Fläche (107) und dem zweiten Modul (104) eingesetzt wird, proximal zu dem ersten Modul (102), und/oder wobei der mindestens eine spektroskopische Detektor (106) des zweiten Moduls (104) dazu angeordnet ist, Daten zu erfassen, die eine zweite Eigenschaft des Objekts (210a) darstellen, wenn das Objekt (210a) in den offenen Raum zwischen der ersten Fläche (107) und dem zweiten Modul (104) eingesetzt wird, proximal zu dem zweiten Modul (104).

6. Einrichtung (100) nach einem der vorstehenden Ansprüche, wobei das erste Modul (102) einen oben offenen, abgeschirmten Behälter, um den mindestens einen Strahlungsdetektor (112) von den Seiten und von unten abzuschirmen, und/oder eine Kollimationsblende, die dazu angeordnet ist, wenn sie in einer geschlossenen Konfiguration ist, das Sichtfeld des mindestens einen Strahlungsdetektors (112) abzudecken, und, wenn sie in einer offenen Konfiguration ist, das Sichtfeld des mindestens einen Strahlungsdetektors (112) freizulegen, umfasst.

7. Einrichtung (100) nach einem der vorstehenden Ansprüche, wobei das zweite Modul (104) kompakter als das erste Modul (102) ist und/oder das zweite Modul (104) eine Apertur oder eine Öffnung umfasst, durch die ein Strahlungsstrahl übertragen werden kann, und/oder das zweite Modul (104) einen Metalldetektor (108) umfasst.

8. Einrichtung (100) nach einem der vorstehenden Ansprüche, wobei der mindestens eine Strahlungsdetektor (112) des ersten Moduls (102) eine Vielzahl von in einem Array angeordneten Gamma-Detektorelementen (111a-n) umfassen kann, wobei optional jedes Gamma-Detektorelement (111a-n) einen Cadmium-Zink-Tellurid(CZT)-Detektor umfasst und/oder eine Verbindung zu einem jeweiligen Mehrkanalanalysator (MCA) umfasst.

9. Einrichtung (100) nach einem der vorstehenden Ansprüche, wobei das erste Modul (102) einen Pu/Am-Strahlungsdetektor zum Erfassen von Daten umfasst, die ein Verhältnis von Plutonium und Americium darstellen, und/oder das zweite Modul (104) einen Alpha-Beta-Strahlungsdetektor (110) umfasst.

10. Einrichtung (100) nach einem der vorstehenden Ansprüche, wobei der spektroskopische Detektor (106) Atomemissionsspektroskopie nutzt, um ein Spektrum zur Verwendung beim Identifizieren eines oder mehrerer chemischer Elemente, die das Objekt (210a) bilden, zu erfassen, und/oder wobei der spektroskopische Detektor (106) einen aktiven spektroskopischen Detektor umfasst, z. B. einen Detektor für laserinduzierte Durchbruchspektroskopie (LIBS) oder einen Röntgenfluoreszenz(XRF)-Detektor.

11. System (200) zum Charakterisieren und Kategorisieren von potenziell kontaminierten Abfällen, umfassend:
eine eigenständige Einrichtung (100) zum Charakterisieren von potenziell kontaminierten Abfällen nach Anspruch 1; und
ein Sortiermodul, das dazu angeordnet ist, das Objekt (210a) in die Kategorie zu sortieren.

12. System nach Anspruch 11, umfassend einen Mechanismus (214), der angeordnet ist zum: Erhalten des Objekts (210a) von einem Quellort (212), wobei sich der Quellort (212) getrennt von und beabstandet von der eigenständigen Einrichtung (100) befindet; Bewegen des Objekts (210a) und Einsetzen des Objekts (210a) in den offenen Raum zwischen der ersten Fläche (107) und dem zweiten Modul (104) der eigenständigen Einrichtung (100).

13. Verfahren zum Charakterisieren und Kategorisieren von potenziell kontaminierten Abfällen, umfassend:
Präsentieren eines Objekts (210a) an eine eigenständige Einrichtung (100) zum Charakterisieren von potenziell kontaminierten Abfällen, wobei die eigenständige Einrichtung (100) ein erstes Modul (102) und ein zweites Modul (104) umfasst, wobei das erste Modul (102) eine Massenwaage (118) und eine erste Fläche (107), die durch die Massenwaage (118) gestützt wird, umfasst;
Positionieren des Objekts (210a) in einen offenen Raum zwischen der ersten Fläche (107) des ersten Moduls (102) und dem zweiten Modul (104);
Erfassen von Daten, die eine erste Eigenschaft des Objekts (210a) darstellen, unter Verwendung mindestens eines Strahlungsdetektors (112), wobei das erste Modul (102) den mindestens einen Strahlungsdetektor (112) umfasst, wobei die erste Fläche (107) zwischen dem mindestens einen Strahlungsdetektor (112) und dem offenen Raum angeordnet ist;
Erfassen von Daten, die eine zweite Eigenschaft des Objekts (210a) darstellen, unter Verwendung eines spektroskopischen Detektors (106), wobei das zweite Modul (104) den spektroskopischen Detektor (106) umfasst;
Speichern und/oder Übertragen der erfassten Daten, die die erste und/oder zweite Eigenschaft des Objekts (210a) darstellen;
Bestimmen der Radioaktivität des Objekts (210a) pro gegebener Masse basierend auf den erfassten Daten, die die erste und/oder die zweite Eigenschaft darstellen;
Zuordnen des Objekts (210a) zu einer Kategorie basierend auf der Radioaktivität des Objekts (210a) pro gegebener Masse; und
Sortieren des Objekts (210a) in die Kategorie.

14. Verfahren nach Anspruch 13, umfassend, vor dem Präsentieren des Objekts (210a) an die eigenständige Einrichtung (100), Durchführen einer Hintergrundzählung unter Verwendung des mindestens einen Strahlungsdetektors (112) zur Hintergrundsubtraktion und/oder Reinigen der ersten Fläche (107) unter Verwendung eines Vakuumsystems und/oder Präsentieren eines Objekts (210a) an eine eigenständige Einrichtung (100), umfassend Halten oder Platzieren des Objekts (210a) proximal zu dem einen von dem ersten Modul (102) und dem zweiten Modul (104) und anschließend Halten oder Platzieren des Objekts (210a) proximal zu dem anderen von dem ersten Modul (102) und dem zweiten Modul (104).

15. Verfahren nach Anspruch 13 oder 14, wobei das Verfahren Senden von entsprechenden Anweisungen an eine Steuerlogik eines Mechanismus (214) zum Präsentieren eines Objekts (210a) an eine eigenständige Einrichtung (100), sobald dem Objekt (210a) eine Kategorie zugeordnet wurde, und Steuern eines Betätigungsmittels des Mechanismus (214), um das Objekt (210a) in einen Zielort zu sortieren, der der Kategorie zugeordnet ist, umfasst.

## Revendications

1. Appareil autonome (100) pour caractériser des déchets potentiellement contaminés, comprenant :
un premier module (102) comprenant une première surface (107) et au moins un détecteur de rayonnement (112) conçu pour capturer des données représentatives d'une première propriété d'un objet (210a) ;
dans lequel le premier module (102) comprend une masse d'équilibrage (118) et la première surface (107) est supportée par ladite masse d'équilibrage (118) ;
un deuxième module (104) comprenant au moins un détecteur spectroscopique (106) conçu pour capturer des données représentatives d'une deuxième propriété de l'objet (210a) ;
un volume ouvert entre la première surface (107) et le deuxième module (104) pour recevoir l'objet (210a), dans lequel la première surface (107) est agencée entre l'au moins un détecteur de rayonnement (112) et le volume ouvert ; et
une mémoire et/ou un émetteur conçus pour stocker et/ou transmettre les données capturées représentatives des première et/ou deuxième propriétés de l'objet (210a) ;
dans lequel les données stockées ou transmises représentatives des première et/ou deuxième propriétés de l'objet (210a) sont utilisées pour déterminer la radioactivité de l'objet (210a) par masse donnée pour catégoriser l'objet (210a).

2. Appareil (100) selon la revendication 1, dans lequel la première propriété est liée à un niveau de radioactivité de l'objet (210a) et la deuxième propriété est liée à une composition matérielle de l'objet (210a).

3. Appareil (100) selon la revendication 1 ou la revendication 2, dans lequel le deuxième module (104) est espacé au-dessus du premier module (102), facultativement dans lequel la première surface (107) est agencée pour être tournée vers le haut.

4. Appareil (100) selon la revendication 1, la revendication 2 ou la revendication 3, dans lequel le deuxième module (104) est supporté par un élément de support (103) s'étendant entre le premier module (102) et le deuxième module (104), facultativement dans lequel l'élément de support (103) s'étend partiellement ou entièrement le long d'un bord de chacun du premier module (102) et du deuxième module (104), facultativement dans lequel une distance entre la première surface (107) et le deuxième module (104) est fixée par l'élément de support (103), facultativement dans lequel le premier module (102) et le deuxième module (104) sont séparés d'un espacement compris entre 0,3 m et 2 m.

5. Appareil (100) selon l'une quelconque des revendications précédentes, dans lequel l'au moins un détecteur de rayonnement (112) du premier module (102) est conçu pour capturer des données représentatives d'une première propriété de l'objet (210a), quand l'objet (210a) est inséré dans le volume ouvert entre la première surface (107) et le deuxième module (104), de manière proximale au premier module (102) et/ou dans lequel l'au moins un détecteur spectroscopique (106) du deuxième module (104) est conçu pour capturer des données représentatives d'une deuxième propriété de l'objet (210a), quand l'objet (210a) est inséré dans le volume ouvert entre la première surface (107) et le deuxième module (104), de manière proximale au deuxième module (104).

6. Appareil (100) selon l'une quelconque des revendications précédentes, dans lequel le premier module (102) comprend un contenant protégé à sommet ouvert pour protéger l'au moins un détecteur de rayonnement (112) depuis ses côtés et son dessous et/ou un obturateur collimateur conçu pour recouvrir le champ de vision de l'au moins un détecteur de rayonnement (112) quand il est dans une configuration fermée et pour découvrir le champ de vision de l'au moins un détecteur de rayonnement (112) quand il est dans une configuration ouverte.

7. Appareil (100) selon l'une quelconque des revendications précédentes, dans lequel le deuxième module (104) est plus compact que le premier module (102) et/ou le deuxième module (104) comprend un orifice ou une ouverture par lequel un faisceau de rayonnement peut être émis et/ou le deuxième module (104) comprend un détecteur de métaux (108).

8. Appareil (100) selon l'une quelconque des revendications précédentes, dans lequel l'au moins un détecteur de rayonnement (112) du premier module (102) peut comprendre une pluralité d'éléments de détection de gamma (111a-n) agencés en un réseau, facultativement dans lequel chaque élément de détection de gamma (111a-n) comprend un détecteur de cadmium zinc tellurure (CZT) et/ou comprend une liaison à un analyseur multi-canaux (MCA) respectif.

9. Appareil (100) selon l'une quelconque des revendications précédentes, dans lequel le premier module (102) comprend un détecteur de rayonnement Pu/Am destiné à capturer des données représentatives d'un rapport de plutonium et d'américium et/ou le deuxième module (104) comprend un détecteur de rayonnement alpha-bêta (110).

10. Appareil (100) selon l'une quelconque des revendications précédentes, dans lequel le détecteur spectroscopique (106) utilise la spectroscopie par émission atomique pour capturer un spectre à utiliser dans l'identification d'un ou plusieurs éléments chimiques qui composent l'objet (210a) et/ou dans lequel le détecteur spectroscopique (106) comprend un détecteur spectroscopique actif, par exemple, un détecteur à spectroscopie par claquage induit par laser (LIBS) ou un détecteur à fluorescence à rayons X (XRF).

11. Système (200) pour caractériser et catégoriser des déchets potentiellement contaminés, comprenant :
un appareil autonome (100) destiné à caractériser des déchets potentiellement contaminés selon la revendication 1 ; et un module de tri conçu pour trier l'objet (210a) dans ladite catégorie.

12. Système selon la revendication 11, comprenant un mécanisme (214) conçu pour : obtenir l'objet (210a) depuis un emplacement source (212), l'emplacement source (212) étant séparé et espacé de l'appareil autonome (100) ; déplacer l'objet (210a) et insérer l'objet (210a) dans le volume ouvert entre la première surface (107) et le deuxième module (104) de l'appareil autonome (100).

13. Procédé de caractérisation et de catégorisation de déchets potentiellement contaminés, le procédé comprenant les étapes consistant à :
présenter un objet (210a) à un appareil autonome (100), pour caractériser des déchets potentiellement contaminés, l'appareil autonome (100) comprenant un premier module (102) et un deuxième module (104), dans lequel le premier module (102) comprend une masse d'équilibrage (118) et une première surface (107) supportée par ladite masse d'équilibrage (118) ;
positionner l'objet (210a) dans un volume ouvert entre la première surface (107) du premier module (102) et le deuxième module (104) ;
capturer des données représentatives d'une première propriété de l'objet (210a) en utilisant au moins un détecteur de rayonnement (112), dans lequel le premier module (102) comprend l'au moins un détecteur de rayonnement (112), dans lequel la première surface (107) est agencée entre l'au moins un détecteur de rayonnement (112) et le volume ouvert ;
capturer des données représentatives d'une deuxième propriété de l'objet (210a) en utilisant un détecteur spectroscopique (106), dans lequel le deuxième module (104) comprend le détecteur spectroscopique (106) ;
stocker et/ou transmettre les données capturées représentatives des première et/ou deuxième propriétés de l'objet (210a) ;
déterminer la radioactivité de l'objet (210a) par masse donnée sur la base des données capturées représentatives des première et/ou deuxième propriétés ;
associer l'objet (210a) à une catégorie sur la base de la radioactivité de l'objet (210a) par masse donnée ; et
trier l'objet (210a) dans ladite catégorie.

14. Procédé selon la revendication 13, comprenant, avant la présentation de l'objet (210a) à l'appareil autonome (100), la réalisation d'un comptage d'arrière-plan en utilisant l'au moins un détecteur de rayonnement (112) pour une soustraction d'arrière-plan et/ou le nettoyage de la première surface (107) en utilisant un système sous vide et/ou la présentation d'un objet (210a) à un appareil autonome (100) comprend le maintien ou la mise en place de l'objet (210a) de manière proximale à l'un parmi le premier module (102) et le deuxième module (104) et ensuite le maintien ou la mise en place de l'objet (210a) de manière proximale à l'autre parmi le premier module (102) et le deuxième module (104).

15. Procédé selon la revendication 13 ou la revendication 14, dans lequel le procédé comprend, une fois qu'une catégorie a été associée à l'objet (210a), l'envoi d'instructions correspondantes à une logique de commande d'un mécanisme (214) pour présenter un objet (210a) à un appareil autonome (100), et la commande d'un moyen d'actionnement du mécanisme (214) pour trier l'objet (210a) dans un emplacement de destination associé à la catégorie.
